# EUROPEAN PATENT APPLICATION

(11) **EP 4 340 490 A1**
(43) Date of publication of application: **20.03.2024**
(21) Application number: 21941827.4
(22) Date of filing: 10.05.2021
(51) Int. Cl.: H04W 72/04, H04W 28/04

(54) **TERMINAL, BASE STATION, AND FEEDBACK METHOD**

(71) Applicant: NTT DOCOMO, INC., Chiyoda-ku Tokyo 100-6150 (JP)
(72) Inventor: SHIBAIKE, Naoya, Tokyo 100-6150 (JP); HARADA, Hiroki, Tokyo 100-6150 (JP); NAGATA, Satoshi, Tokyo 100-6150 (JP); PI, Qiping, Beijing, 100190 (CN); WANG, Jing, Beijing, 100190 (CN); CHEN, Lan, Beijing, 100190 (CN)
(74) Representative: Hoffmann Eitle
(86) International application number: PCT/JP2021/017781
(87) International publication number: WO 2022/239093

(57) **Abstract**

A terminal including: a control unit configured to determine a plurality of DL slots for which scheduling may be performed by one piece of control information received from a base station by extending a DL slot corresponding to a parameter value that indicates a transmission timing of feedback information, and to determine candidate reception occasions in the plurality of DL slots; and a transmission unit configured to transmit, to the base station, feedback information for the candidate reception occasions in the plurality of DL slots.

## Description

### FIELD OF THE INVENTION

The present invention relates to a terminal, a base station, and a feedback method in a wireless communication system.

### BACKGROUND ART

In NR (New Radio) (also referred to as "5G"), which is a successor system of LTE (Long Term Evolution), a technology that satisfies requirements such as a large-capacity system, a high-speed data transmission rate, a low delay, simultaneous connection of a large number of terminals, low cost, and power saving and the like are being studied (for example, Non-Patent Document 1). In addition, in NR, use of a high-frequency band such as 52.6 to 114. 25GH has been studied.

Also, in the NR system, in order to expand a frequency band, use of a frequency band (also referred to as an unlicensed band, an unlicensed carrier, or an unlicensed CC) which is different from a licensed band licensed to a communication carrier (operator) is supported.

### Prior Art Document

### Non Patent Literature

Non-Patent Document 1 : 3GPP TS 38.300 V16.4.0 (2020 - 12)
Non-Patent Document 2 : 3GPP TS 38.331 V16.3.0 (2020 - 12)
Non-Patent Document 3 : 3GPP TS 38.213 V16.4.0 (2020 - 12)
Non-Patent Document 4 : 3GPP TS 38.321 V16.3.0 (2020 - 12)
Non-Patent Document 5 : 3GPP TS 38.214 V16.4.0 (2020 - 12)

### SUMMARY OF THE INVENTION

### Problems to be Solved by the Invention

When the slot length becomes shorter with the use of the high frequency band, it is assumed that a base station schedules a plurality of PDSCHs to a terminal with one piece of control information (DCI).

However, in the related art described in Non-Patent Documents 1 to 5 and the like, when a plurality of PDSCHs are scheduled by one DCI, how to generate and transmit feedback information (specifically, HARQ-ACK information) is not defined, and there is a possibility that the feedback information cannot be appropriately transmitted in the related art.

The present invention has been made in view of the above-described points, and an object thereof is to provide a technique that enables a terminal to appropriately transmit feedback information in a case where a plurality of PDSCHs are scheduled by one piece of control information.

### Means for solving the problem

According to the disclosed technology, there is provided a terminal including:
a control unit configured to determine a plurality of DL slots for which scheduling may be performed by one piece of control information received from a base station by extending a DL slot corresponding to a parameter value that indicates a transmission timing of feedback information, and to determine candidate reception occasions in the plurality of DL slots; and
a transmission unit configured to transmit, to the base station, feedback information for the candidate reception occasions in the plurality of DL slots.

### Effects of the Invention

According to the disclosed technology, there is provided a technique that enables a terminal to appropriately transmit feedback information in a case where a plurality of PDSCHs are scheduled by one piece of control information.

### BRIEF DESCRIPTION OF THE DRAWINGS

[Fig. 1] FIG. 1 is a diagram for explaining a wireless communication system according to an embodiment of the present invention;
[Fig. 2] FIG. 2 is a diagram for explaining a wireless communication system according to an embodiment of the present invention;
[Fig. 3] FIG. 3 is a diagram showing an example of a band;
[Fig. 4] FIG. 4 is a diagram showing a relationship between SCS and symbol length;
[Fig. 5] FIG. 5 is a diagram showing an example of a basic procedure in an embodiment of the present invention;
[Fig. 6] FIG. 6 is a diagram for explaining a method of determining a PDSCH slot window;
[Fig. 7] FIG. 7 is a diagram for explaining a method of determining a PDSCH slot window;
[Fig. 8] FIG. 8 is a diagram for explaining a method of determining a candidate reception opportunity in each slot;
[Fig. 9] FIG. 9 is a diagram illustrating an example of a HARQ-ACK codebook;
[Fig. 10] FIG. 10 is a diagram illustrating scheduling of a plurality of PDSCHs by one DCI;
[Fig. 11] FIG. 11 is a diagram illustrating an example of a TDRA table according to Example 1;
[Fig. 12] FIG. 12 is a diagram for explaining a method of determining a plurality of PDSCH slots in Example 1;
[Fig. 13] FIG. 13 is a diagram for explaining a method of determining a candidate reception opportunity in Example 1;
[Fig. 14] FIG. 14 is a diagram for explaining a method of determining a candidate reception opportunity in Example 1;
[Fig. 15] FIG. 15 is a diagram illustrating an example of an HARQ-ACK codebook in Example 2;
[Fig. 16] FIG. 16 is a diagram illustrating an example of a TDRA table in Example 2;
[Fig. 17] FIG. 17 is a diagram for explaining a method of determining an extended PDSCH slot window in Example 2;
[Fig. 18] FIG. 18 is a diagram for explaining a method of determining an extended PDSCH slot window in Example 2;
[Fig. 19] FIG. 19 is a diagram for explaining a method of determining an extended PDSCH slot window in Example 2;
[Fig. 20] FIG. 20 is a diagram for explaining a method of determining an extended PDSCH slot window in Example 2;
[Fig. 21] FIG. 21 is a diagram showing an example of a TDRA table in Example 2;
[Fig. 22] FIG. 22 is a diagram for explaining a method of determining an extended PDSCH slot window in Example 2;
[Fig. 23] FIG. 23 is a diagram for explaining a method of determining an extended PDSCH slot window in Example 2;
[Fig. 24] FIG. 24 is a diagram for explaining a method of determining an extended PDSCH slot window in Example 2;
[Fig. 25] FIG. 25 is a diagram for explaining a method of determining an extended PDSCH slot window in Example 2;
[Fig. 26] FIG. 26 is a diagram for explaining a method of determining a candidate reception opportunity in Example 2;
[Fig. 27] FIG. 27 is a diagram showing an example of a functional configuration of a base station 10 according to an embodiment of the present invention;
[Fig. 28] FIG. 28 is a diagram showing an example of a functional configuration of a terminal 20 according to an embodiment of the present invention;
[Fig. 29] FIG. 29 is a diagram showing an example of a hardware configuration of a base station 10 or a terminal 20 according to an embodiment of the present invention.

### EMBODIMENTS FOR CARRYING OUT THE INVENTION

Hereinafter, embodiments of the present invention will be described with reference to the drawings. It should be noted that the embodiments described below are merely examples, and embodiments to which the present invention is applied are not limited to the following embodiments.

In the operation of the wireless communication system according to an embodiment of the present invention, an existing technique is appropriately used. The existing technology is, for example, an existing NR. The wireless communication system (base station 10 and terminal 20) according to the present embodiment basically operates in accordance with existing provisions (e.g., Non-Patent Documents 1 to 5). However, in order to solve the problem in the case where the use of the high frequency band is assumed, the base station 10 and the terminal 20 also execute an operation which is not included in the existing provision. In the following description of the embodiments, operations that are not specified in the existing provisions are mainly described. The numerical values described below are examples.

Further, in the embodiments of the present invention, the duplex scheme may be a TDD (Time Division Duplex) scheme, an FDD (Frequency Division Duplex) scheme, or another scheme (for example, Flexible Duplex).

In addition, in the embodiments of the present invention, when a radio parameter or the like is "configured", a predetermined value may be pre-configured or a radio parameter notified from the base station 10 or the terminal 20 may be configured.

### (System Configuration)

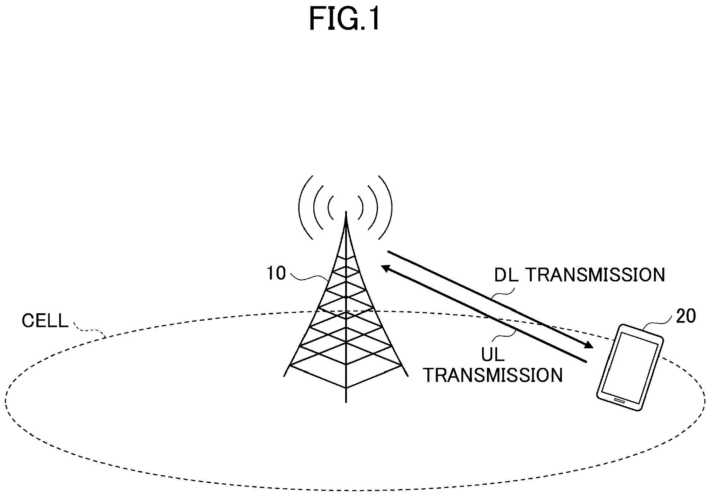

FIG. 1 is a diagram for explaining a wireless communication system according to an embodiment of the present invention. As shown in FIG. 1, the radio communication system according to the embodiment of the present invention includes a base station 10 and a terminal 20. Although one base station 10 and one terminal 20 are shown in FIG. 1, this is merely an example, and a plurality of base stations 10 and a plurality of terminals 20 may be provided.

The base station 10 is a communication apparatus that provides one or more cells and performs wireless communication with the terminal 20. The physical resources of a radio signal are defined in the time domain and the frequency domain.

OFDM is used as the radio access scheme. In the frequency-domain, at least 15kHz, 30kHz, 120kHz, and 240kHz are supported for subcarrier spacing (SCS). Also, regardless of the SCS, a resource block is configured by a predetermined number (for example, 12) of consecutive subcarriers.

When performing initial access, the terminal 20 detects an SSB (SS / PBCH block), and identifies an SCS in a PDCCH and a PDSCH based on a PBCH included in the SSB.

Further, in the time domain, a slot is formed by a plurality of OFDM symbols (for example, 14 symbols regardless of subcarrier spacing). Hereinafter, an OFDM symbol is referred to as a "symbol". A slot is a scheduling unit. In addition, subframe of the 1ms section is defined, and a frame including 10 subframes is defined. Note that the number of symbols per slot is not limited to 14 .

As illustrated in FIG. 1, a base station 10 transmits control information or data to a terminal 20 through downlink (DL), and receives control information or data from the terminal 20 through uplink (UL). Both the base station 10 and the terminal 20 are capable of transmitting and receiving signals by performing beamforming. In addition, both the base station 10 and the terminal 20 can apply communication by MIMO (Multiple Input Multiple Output) to DL or UL. Each of the base station 10 and the terminal 20 may perform communication via a secondary cell (SCell) and a primary cell (PCell) by carrier aggregation (CA).

The terminal 20 is a communication apparatus having a wireless communication function, such as a smartphone, a mobile phone, a tablet, a wearable terminal, and an M2M (Machine-to-Machine) communication module. As shown in FIG. 1, the terminal 20 uses various communication services provided by the radio communication system by receiving control information or data from the base station 10 in DL and transmitting control information or data to the base station 10 in UL.

The terminal 20 is capable of performing carrier aggregation for performing communication with the base station 10 by bundling a plurality of cells (a plurality of CCs (component carriers)). In carrier aggregation, one PCell (primary cell) and one or more SCells (secondary cells) are used. Also, a PUCCH-SCell with a PUCCH may be used.

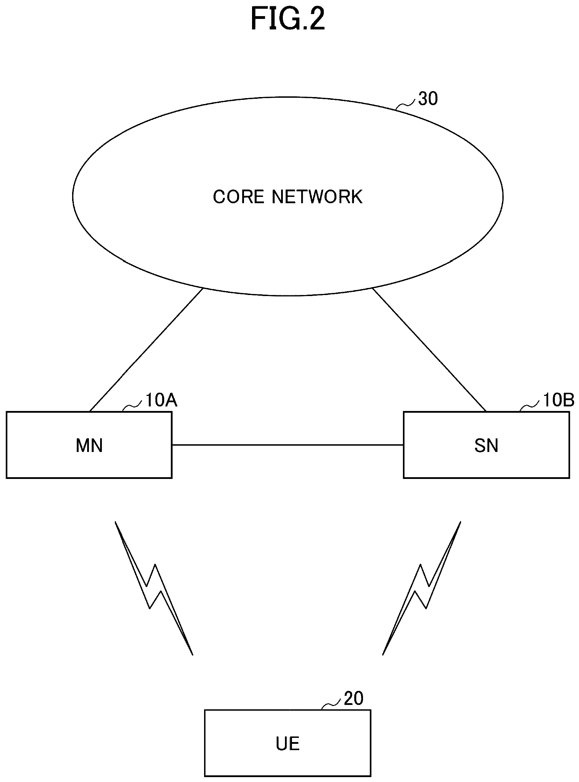

FIG. 2 illustrates a configuration example of a radio communication system in a case where NR-dual connectivity (NR-DC) is executed. As shown in FIG. 2, a base station 10A serving as MN (Master Node) and a base station 10B serving as SN (Secondary Node) are provided. The base stations 10A and 10B are each connected to a core network. The terminal 20 communicates with both the base stations 10A and 10B.

A cell group provided by the base station 10A that is the MN is referred to as an MCG (Master Cell Group), and a cell group provided by the base station 10B that is the SN is referred to as an SCG (Secondary Cell Group). In DC, the MCG includes one PCell and one or more SCells, and the SCG includes one PSCell (Primary SCell) and one or more SCells. Note that in the present specification, a component carrier (CC) and a cell may be used synonymously. Also, the PCell and the PSCell may be referred to as an SPCell.

In the radio communication system according to the present embodiment, when an unlicensed band is used, LBT (Listen Before Talk) is executed. The base station 10 or the terminal 20 performs signal sensing, performs transmission when the sensing result is idle, and does not perform transmission when the sensing result is busy. LBT is not necessarily performed in the unlicensed band. There may be a case where LBT is not performed in an unlicensed band.

### (About Frequency Band)

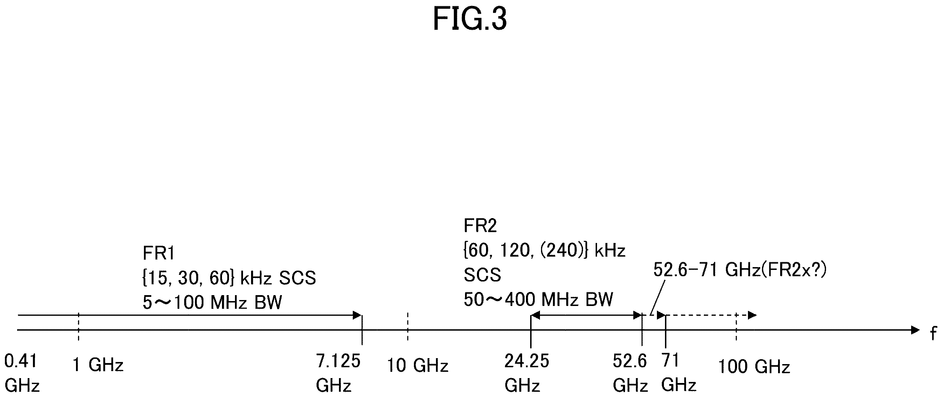

FIG. 3 shows an example of frequency bands used in existing NR and frequency bands used in the radio communication system according to the present embodiment. As a band (may be referred to as a frequency range) in existing NR, there are two bands of FR1 (0. 41GHz to 7.125 GHz) and FR2 (24. 25GHz to 52. 6GHz). As illustrated in FIG. 3, in FR1, 15kHz, 30kHz, and 60kHz are supported as SCSs, and 5 to 100MHz is supported as a bandwidth (BW). In FR2, 60kHz, 120kHz, and 240kHz (only SSB) are supported as SCSs, and 50 to 400MHz is supported as the bandwidth (BW).

In the radio communication system according to the present embodiment, it is assumed that a band higher than 52. 6GHz (for example, 52. 6GHz to 114. 25GHz) which is not used in the existing NR is also used. This band may be referred to as FR4, for example.

Further, in the present embodiment, as the frequency band is expanded as described above, it is assumed that an SCS wider than an existing SCS is used. For example, 480kHz or an SCS wider than 480kHz is used as an SCS of SSB and PDCCH / PDSCH.

In the high frequency band, it is assumed that a large number of narrow beams are used to compensate for a large propagation loss. As the SCS, an SCS (for example, 480kHz or 960kHz) wider than the existing SCS in FR2 is used.

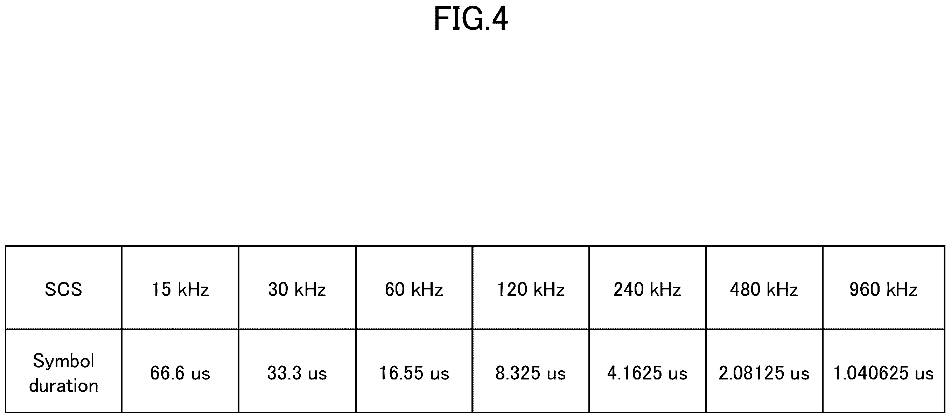

FIG. 4 is a diagram illustrating a relationship between SCS and symbol length (time length of the symbol). As shown in FIG. 4, when the SCS becomes wider, the symbol length (time length of the symbol) becomes shorter. If the number of symbols per slot is constant (i.e., 14 symbols), the slot length becomes shorter as the SCS becomes wider.

In the radio communication system, the terminal 20 transmits HARQ-ACK information in which a HARQ-ACK information bit value is set in a HARQ-ACK Codebook (HARQ-ACK CB) to the base station 10 as feedback in response to data reception by a PDSCH from the base station 10. Note that transmitting / receiving data by a PDSCH may be rephrased as transmitting / receiving a PDSCH.

However, as described above, when the slot length becomes short due to the use of the high frequency band, it is assumed that a plurality of PDSCHs are scheduled by scheduling based on one time of DCI, and how to generate a HARQ-ACK CB based on such assumption is not clear in the related art.

Hereinafter, embodiments related to generation of a HARQ-ACK CB and transmission of HARQ-ACK information in a form of scheduling a plurality of PDSCHs by scheduling using one DCI will be described.

### (Basic Operation)

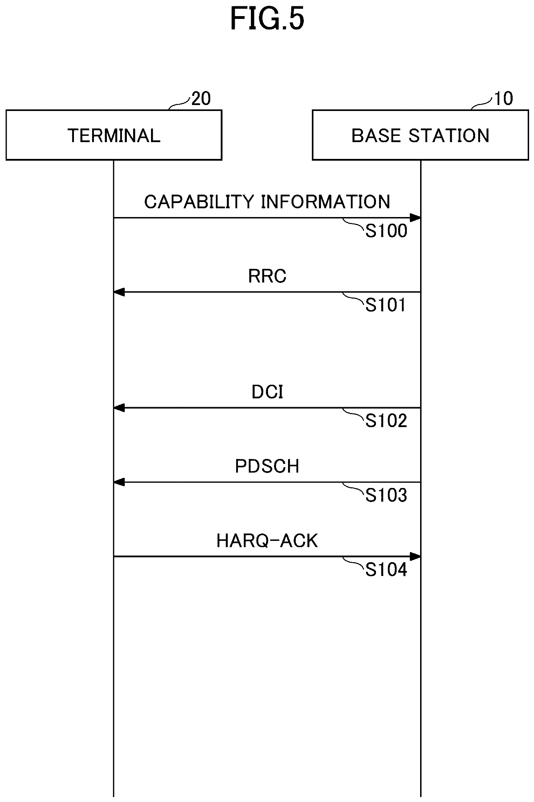

First, a basic operation example in the radio communication system according to the present embodiment will be described with reference to FIG. 5.

In S100, the terminal 20 transmits capability information (UE capability) to the base station 10. Based on the capability information, the base stations 10 can determine content of information to be transmitted to the terminal 20 in the following S101 and S102, for example.

In S101, the base station 10 transmits configuration information to the terminal 20 by an RRC message, and the terminal 20 receive the configuration information. The configuration information is configuration information related to, for example, a K1 set and TDRA table as described below. Note that both the K1 set and the TDRA table may be notified from the base station 10 to the terminal 20, or may be determined in advance by specifications or the like, and the base station 10 and the terminal 20 may use the determined K1 set and TDRA table. The TDRA table may also be referred to as time-domain resource allocation configuration information.

In S102, the base station 10 transmits scheduling (assignment information) for a plurality of PDSCHs to the terminal 20 by a DCI, and the terminal 20 receives the DCI. The DCI also includes information on an uplink resource for transmitting HARQ-ACK information.

In S103, the terminal 20 receives a PDSCH based on the scheduling information in the DCI, and transmits HARQ-ACK information to the base station 10 in S104. The base station 10 receives the HARQ-ACK information.

### (Regarding Type 1 HARQ-ACK CB GENERATION)

In the present embodiment, Type 1 HARQ-ACK CB is targeted. First, a method of generating a Type 1 HARQ-ACK CB in R16 (Release 16) will be described (Non-Patent Document 3 and the like). In the following description, a case where a PUCCH is used as a channel for transmitting HARQ-ACK information will be described, but the channel for transmitting HARQ-ACK information may be a PUSCH.

First, as a rough flow, there are the following steps A and B. The following flow itself is the same in Examples 1 and 2.

In step A, the terminal 20 determines HARQ-ACK occasions indicating PDSCHs that are likely to be received. An index of a bit in the HARQ-ACK occasions represents a reception opportunity of each PDSCH. The HARQ-ACK occasions may be referred to as a HARQ-ACK codebook.

In step B, the terminal 20 determines values of O^{ACK} HARQ-ACK information bits in the HARQ-ACK occasions determined in step A. For example, if data can be normally received in a certain reception occasion, the bit is a bit indicating ACK.

Then, the terminal 20 transmits, to the base station 10, the HARQ-ACK information in which the value of the HARQ-ACK information bit is set at the bit position of each reception opportunity.

More specifically, step A comprises the following steps A-1 and A-2.

### <Step A-1>

The terminal 20 determines a PDSCH slot window based on the configured K1 set.

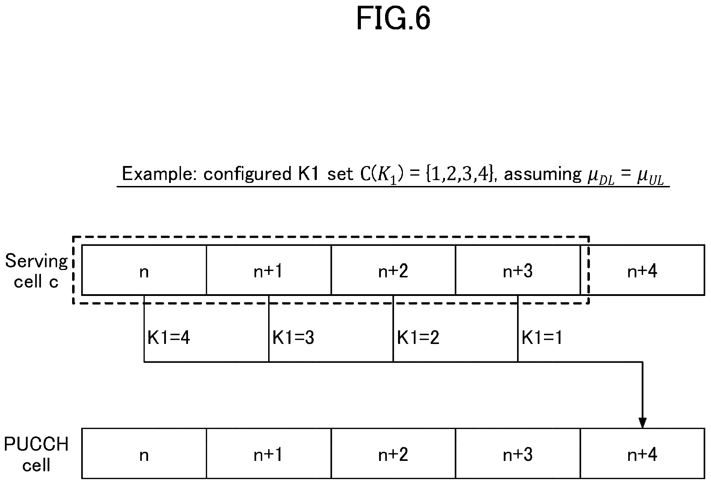

An example of a PDSCH slot window for the case where K1 set C (K₁) = {1,2,3,4} and uplink and downlink numerologies are equal (µ_{DL} = µ_{UL}) is shown in FIG. 6.

In FIG. 6, the upper part shows a serving cell c that receives a PDSCH, and the lower part shows a PUCCH cell. The same applies to the following drawings.

K1 indicates a distance (the number of slots) between a slot in which the PDSCH is received and a slot in which the PUCCH is transmitted when viewed from the PUCCH cell. That is, the K1 is a parameter value indicating a timing at which feedback is transmitted. In the case of FIG. 6, since the PUCCH is transmitted in the slot n + 4 of the PUCCH cell, the slots n to n + 3 of the serving cell c are determined as a PDSCH slot window (a time window of slots in which a PDSCH may be received).

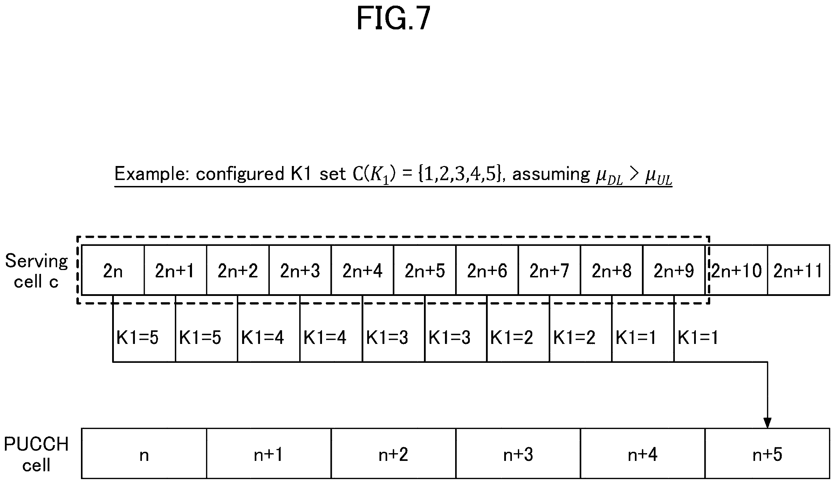

An example of a PDSCH slot window in case of K1 set C (K₁) = {1,2,3,4,5} and µ_{DL}>µ_{UL} is shown in FIG. 7. In the case of FIG. 7, since a PUCCH is transmitted in the slot n + 5 of the PUCCH cell, slots 2n to 2n + 9 of the serving cell c are determined as a PDSCH slot window (a time window of slots in which a PDSCH may be received). For example, since the slot 2n of the serving cell corresponds to a time position of the slot n of the PUCCH cell, the slot n + 5 that is after five slots (K1 = 5) based on the slot length in the PUCCH cell becomes a slot for transmitting a PUCCH.

### <Step A-2>

In step A-2, the terminal 20 determines candidate PDSCH reception occasions (opportunities) for each slot in the window determined in step A-2. In particular, the procedure from S1 to S3 is executed as follows.

In S1, the candidate PDSCH reception occasions may be associated with a set R (a set of rows) of TDRA (Time Domain Resource Allocation) table.

In S2, from the allocation information (SLIV) in the TDRA table, a portion overlapping with a portion in which UL configured by TDD-UL-DL-ConfigurationCommon and TDD-UL-DL-ConfigDedicated is configured is excluded.

In S3, for candidate PDSCH reception occasions overlapping in the time domain, candidate PDSCH reception occasions are determined according to a predetermined rule.

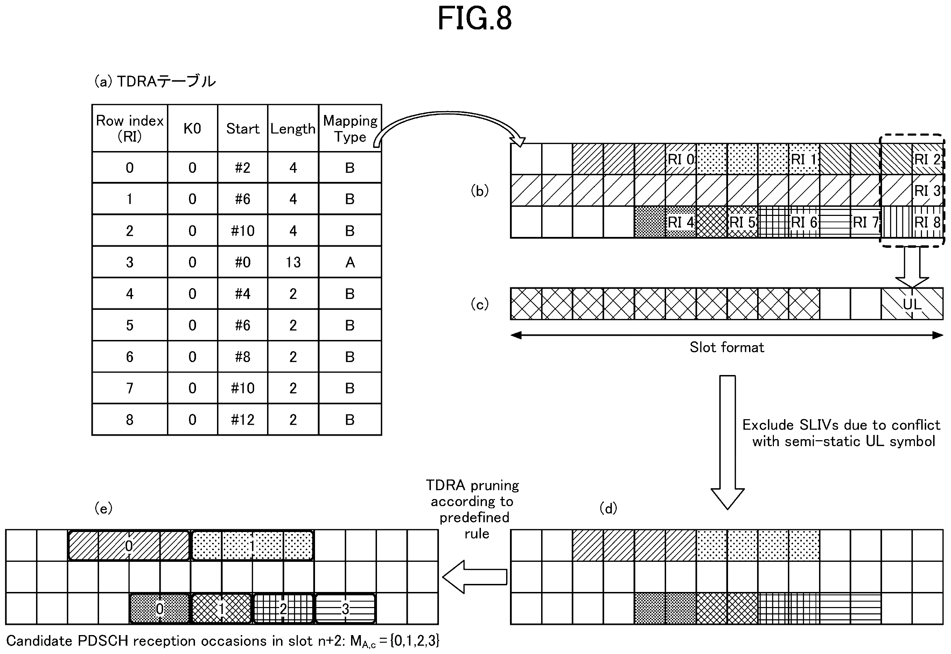

With reference to FIG. 8, an example of determining candidate PDSCH reception occasions in a slot n will be described. In the TDRA table shown in FIG. 8 (a), one row corresponds to one SLIV (allocation information: indicating a start symbol and a symbol length in a slot), and there are nine types, each of which is identified by an index (RI) of the row. An RI is designated by a DCI, and the terminal 20 recognizes the designated SLIV as an actual PDSCH reception occasion. K1 is also specified by the DCI.

(b) shows SLIV of all RIs defined in the TDRA table on a slot. Although three slots are shown for convenience of notation, it is shown that there are nine types of SLIV candidates in one slot.

Here, as shown in (c), RI2, RI3, and RI8 are excluded from the candidate PDSCH reception occasions because they overlap with semi-static UL symbols.

The SLIV after removing RI2, RI3, and RI8 are RI0, RI1, and RI4 to 7. As shown in (d) and (e), although RI0 and RI4 overlap and RI1 and RI5 and RI6 overlap, according to a predetermined rule, RI0 and RI4 become one occasion as a candidate PDSCH reception and an index 0 is assigned thereto, and RI1 and RI5 also become one occasion as a candidate PDSCH reception and an index 1 is assigned thereto. As a result, the candidate PDSCH reception occasions (M_{A,c}) in this slot is {0,1,2,3}.

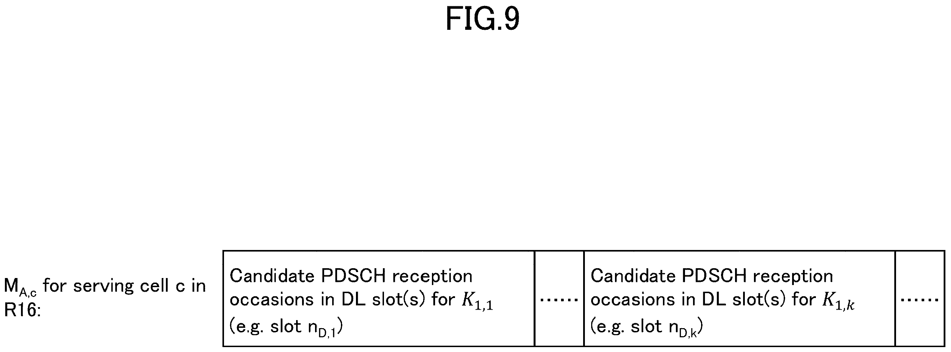

By performing the above-described processing in each slot, as shown in FIG. 9, M_{A,c} including candidate PDSCH reception occasions of each slot in the PDSCH slot window is generated.

### (Multi-PDSCH/PUSCH scheduling)

In the present embodiment, multi-PDSCH / PUSCH scheduling is supported in which scheduling of a plurality of PDSCHs (or a plurality of PUSCHs) is performed by scheduling based on one DCI. Hereinafter, multi-PDSCH scheduling will be described.

The TDRA table used in multi-PDSCH scheduling is, for example, a table having one or more SLIV(s) in each row. In addition, a plurality of PDSCHs scheduled by one DCI may or may not be consecutive in time domain.

More specifically, the TDRA table is extended such that each row indicates up to eight PDSCHs. Each PDSCH has a separate SLIV and mapping type. The number of PDSCHs scheduled by one DCI is implicitly indicated by the number of valid SLIVs in the row of the TDRA table indicated by the DCI.

### (HARQ-ACK in multi-PDSCH scheduling)

In the present embodiment, the terminal 20 can transmit HARQ-ACK feedback for a plurality of PDSCHs scheduled by multi-PDSCH scheduling on the same PUCCH.

That is, HARQ-ACK information corresponding to a plurality of PDSCHs scheduled by one DCI that schedules a plurality of PDSCHs is multiplexed on one PUCCH in a slot determined based on K1.

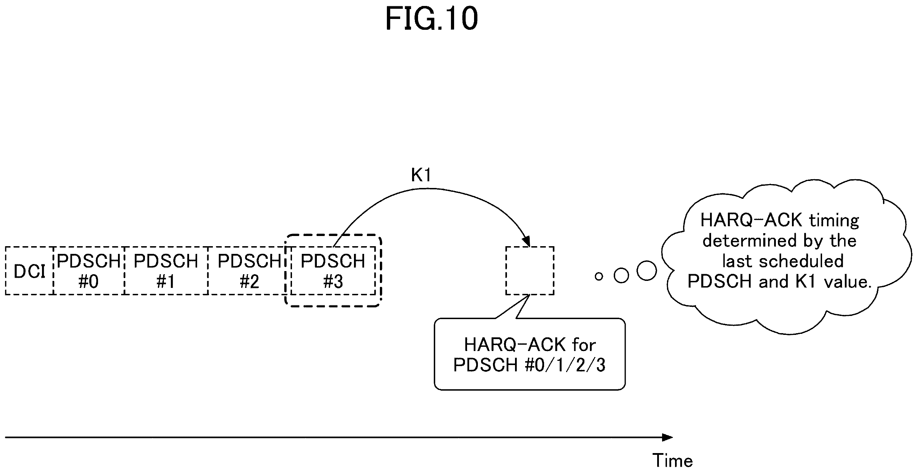

As shown in FIG. 10, the K1 is a slot offset between a slot in the last PDSCH scheduled by the DCI and a slot carrying HARQ-ACK information corresponding to the scheduled PDSCHs.

Note that the K1 is a value notified by the PDSCH-to-HARQ feedback timing indicator field in the DCI. If the PDSCH-to-HARQ feedback timing indicator field is not present in the DCI, the K1 is a value given by dl-DataToUL-ACK.

Also, in the present embodiment, there are the following options 1, 1a, and 2 for generating a type 1 HARQ-ACK codebook corresponding to a DCI scheduling multiple PDSCHs.

### Option 1:

The terminal 20 determines the candidate PDSCH reception occasions based on each SLIV in each row in the TDRA table and the extension of the K1 set.

### Option 1a :

The terminal 20 determines candidate PDSCH reception occasions based on each SLIV in each row in the TDRA table.

### Option 2 :

The terminal 20 determines candidate PDSCH reception occasions based on the last SLIV in each row in the TDRA table.

In this embodiment, the above-mentioned options 1 and 1a are targeted. Hereinafter, an embodiment of how to construct the HARQ-ACK CB when the candidate PDSCH reception occasions are determined based on the entire SLIV of each row of the TDRA table will be described. Example 1 and Example 2 will be described below. The Example 1 and the Example 2 may be combined.

In both the Example 1 and the Example 2, in generation of a HARQ-ACK CB, basically, the same processing as the above-described step A (that is, step A-1 and step A-2) and step B are executed. In Examples 1 and 2, step B is the same as step B described above. Hereinafter, processing contents corresponding to the above-described step A (that is, step A-1 and step A-2) will be mainly described. Also in the following description, the names of step A-1 and step A-2 are used for convenience.

### (Example 1)

### <Step A-1>

In the Example 1, the terminal 20 maps, to each K_{1,k} in the K1 set C (K₁), PDSCH slots (corresponding to the PDSCH slots in the above-described PDSCH slot window) associated with DL slot (s) corresponding to K_{1,k}.

Step A-1 of the Example 1 includes the following Alt1 and Alt2.

### <Alt1>

In Alt1, "PDSCH slots related with DL slot (s) corresponding to K_{1,k}" (PDSCH slots related with corresponding DL slot (s) for K1, k) is determined based on the maximum slot length that can be scheduled by the TDRA row included in the TDRA table, i.e., the difference between the K2 values corresponding to the first SLIV and the last SLIV in each TDRA row.

### <Alt2>

Alt2 has the following option 1 and option 2.

### Option 1 :

The "PDSCH slots associated with the DL slot (s) corresponding to K_{1,k}" means slots (spanning slots) spanning the row of the TDRA table assuming that the last slot in that row of the TDRA table is the DL slot n_{D,k} corresponding to K_{1,k}.

### Option 2 :

TDRA rows inconsistent with DL/UL configuration in TDD (e.g., TDRA row including allocation to be scheduled in slots semi-statically configured with UL slots) are excluded from the TDRA row group to be considered, and "PDSCH slots related with corresponding DL slot (s) for K_{1,k}" (PDSCH slots related with corresponding DL slot (s) for K_{1,k}) is determined from the TDRA row group remaining after the exclusion by applying option 1.

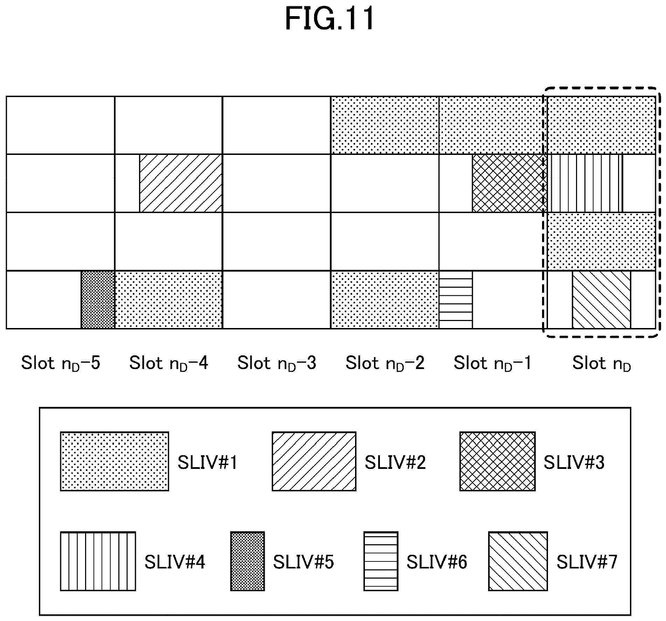

Here, a concrete example of option 1 of Alt2 will be described. It is assumed that the TDRA table is the TDRA table shown in FIG. 11. The TDRA table shown in FIG. 11 indicates that PDSCH allocations are in slot n_{D}-5, slot n_{D}-4, slot n_{D}-2, slot n_{D}-1, and slot n_{D} when viewed across the rows. In each row and each slot, a SLIV is assigned as shown in the figure. For example, SLIV #1 is allocated to the slot n_{D} in the first row.

In the case of such a TDRA table, if the uplink and downlink numerologies are the same, i.e., µ_{DL} = µ_{UL}, then the slot corresponding to a certain value K_{1,k} in the K1 set is a slot n_{D,k}.

In Example 1, the slot n_{D,k} corresponds to the last slot among the scheduled PDSCH slots. Therefore, in the case of the TDRA table of FIG. 11, the candidate PDSCH reception slots (PDSCH slot window) are "slot n_{D,k}-5, slot n_{D,k}-4, slot n_{D,k}-2, slot n_{D,k}-1, slot n_{D,k}".

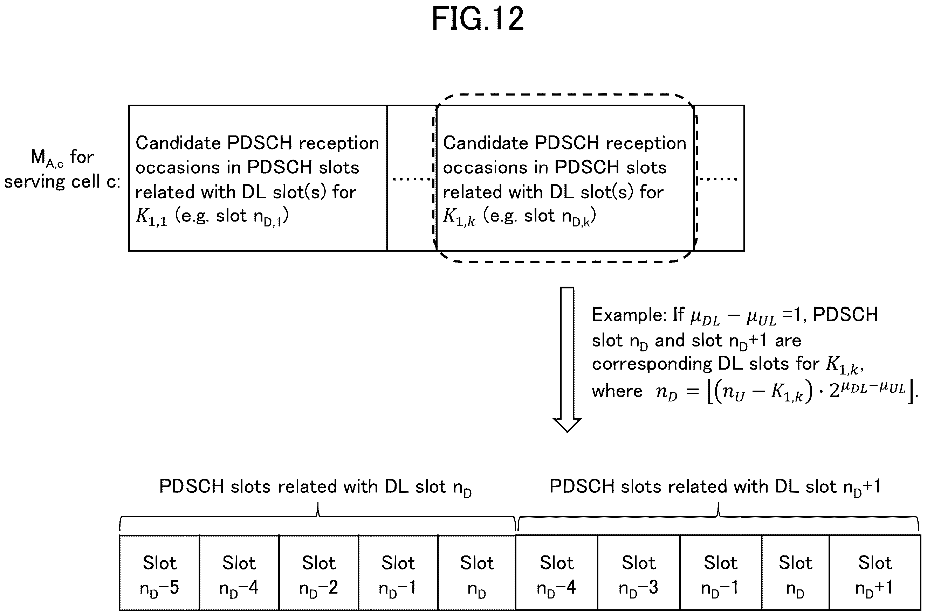

If µ_{DL}> µ_{UL}, there are multiple DL slots corresponding to K_{1,k}, as shown in the example of FIG. 7. For example, as in the example of FIG. 12, when µ_{DL} = µ_{UL} + 1, the DL slots corresponding to K_{1,k} are slot n_{D,k} and slot n_{D,k} + 1. In this case, for each of the plurality of DL slots corresponding to K_{1,k}, candidate PDSCH reception slots are created by arranging PDSCH slots based on the TDRA table.

That is, if µ_{DL}> µ_{UL}, the (window of) candidate PDSCH reception slots corresponding to K_{1,k} will be "[slots associated with slot n_{D,k}], [slots associated with slot n_{D,k} + 1 .

When *µ*_{DL} = *µ*_{UL} + 1, the terminal 20 sets a plurality of slots for the slot n_{D,k} as "slot n_{D,k}-5, slot n_{D,k}-4, slot n_{D,k}-2, slot n_{D,k}-1, slot n_{D,k}" and sets a plurality of slots for the slot n_{D,k} + 1 as "slot n_{D,k}-4, slot n_{D,k}-3, slot n_{D,k}-1, slot n_{D,k}, slot n_{D,k} + 1". Therefore, "PDSCH slots related with DL slot (s) for K_{1,k}" (PDSCH slots associated with DL slot(s) for K_{1,k}) is as shown in FIG. 12 (b).

As shown in FIG. 12, when n_{U} is the number of the PUCCH slot, n_{D} in slot n_{D} can be calculated as the integer part of "(n_{U} - K_{1,k})*2 ^{µ_DL-µ_UL}".

### <Example 1 : Step A-2>

After determining a plurality of PDSCH slots that are DL slots in which a PDSCH may be received as described above, the terminal 20 determines candidate occasions (candidate reception opportunities) for each slot. That is, it is determined which SLIV is likely to be allocated to each slot. In other words, for each slot, at least one SLIV to be a candidate for allocation is determined. As a determination method, there are the following two alternatives Alt1 and Alt2.

### <Example 1, Step A-2, Alt1>

In the Alt1, the terminal 20 uses all types of SLIV in all rows of the TDRA table in each slot of the plurality of PDSCH slots to determine candidate occasions.

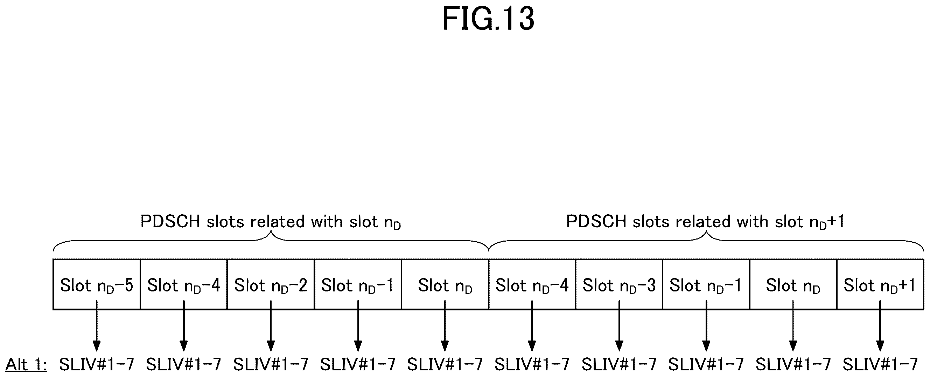

For example, when the TDRA table is as shown in FIG. 11, all types of SLIV are SLIV #1 to #7. Therefore, in this case, the terminal 20 uses SLIV #1 to SL #7 for each slot to determine candidate PDSCH reception occasions. For example, in the case of a plurality of PDSCH slots for K_{1,k} in the example shown in FIG. 12, as shown in FIG. 13, SLIV #1 to #7 for each slot in "slot n_{D,k}-5, slot n_{D,k}-4, slot n_{D,k}-2, slot n_{D,k}-1, slot n_{D,k}, slot n_{D,k}-4, slot n_{D,k}-3, slot n_{D,k}-1, slot n_{D,k}, slot n_{D,k} + 1" are candidates for occasions that are finally determined.

The terminal 20 selects all or a part of SLIV #1 to #7 as the candidate PDSCH reception occasions in each slot based on the UL collision check and a predetermined rule using the same method as the existing technology in R16.

It should be noted that if the considered TDRA row group is a TDRA row group that already excludes a TDRA row group that contradicts the TDD DL / UL configuration, the UL collision check is unnecessary.

### <Example 1, Step A-2, Alt2>

In Alt2, the terminal 20 uses an SLIV used for start symbol and the symbol length notification in each slot of the plurality of PDSCH slots when it is assumed that the last slot of each row of the TDRA table corresponds to the slot n_{D} among all types of SLIV in all rows of the TDRA table to determine the candidate occasions. As described above, the last slot in each row of the TDRA table corresponds to the slot n_{D}. Also, if µ_{DL}> µ_{UL}, each of the multiple DL slots corresponding to K_{1,k} corresponds to the last slot in each row of the TDRA table.

For example, if the TDRA table is as shown in FIG. 11, the SLIV in slot n_{D}-5 is only SLIV #5, the SLIV in slot n_{D}-4 is SLIV #1 and #2, the SLIV in slot n_{D}-2 is only SLIV #1, the SLIV in slot n_{D}-1 is SLIV #1, #3 and #6, and the SLIV in slot n_{D} is SLIV #1, #4 and #7, as shown in FIG. 11. These are candidates for the finally determined occasions in each slot.

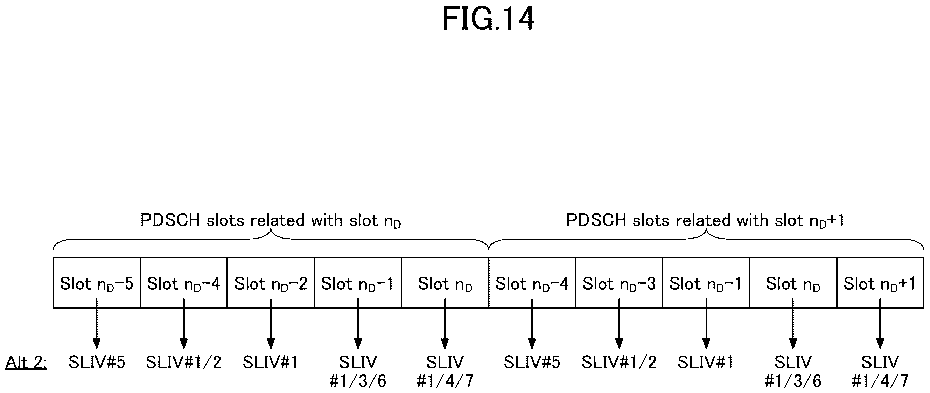

In the case of multiple PDSCH slots for K_{1,k} in the example shown in FIG. 12, as shown in FIG. 14, a set of SLIV selected as described above for each slot in "slot n_{D,k}-5, slot n_{D,k}-4, slot n_{D,k}-2, slot n_{D,k}-1, slot n_{D,k}, slot n_{D,k}-4, slot n_{D,k}-3, slot n_{D,k}-1, slot n_{D,k}, slot n_{D,k} + 1" is a candidate for occasions to be finally determined.

The terminal 20 performs UL collision check by using the same method as the existing technology in R16, and selects all or a part of the set of SLIV in each slot according to a predetermined rule as candidate PDSCH reception occasions. When Alt1 and Alt2 are compared, Alt2 has lower redundancy than Alt1.

It should be noted that if the considered TDRA row group is a TDRA row group that already excludes a TDRA row group that contradicts the TDD DL / UL configuration, the UL collision check is unnecessary.

As a variation other than the above example, the SLIV in each slot may be defined in advance in a specification or the like, and the base station 10 and the terminal 20 may determine the candidate PDSCH reception occasions based on the SLIV defined in the specification.

### (Example 2: Step A-1)

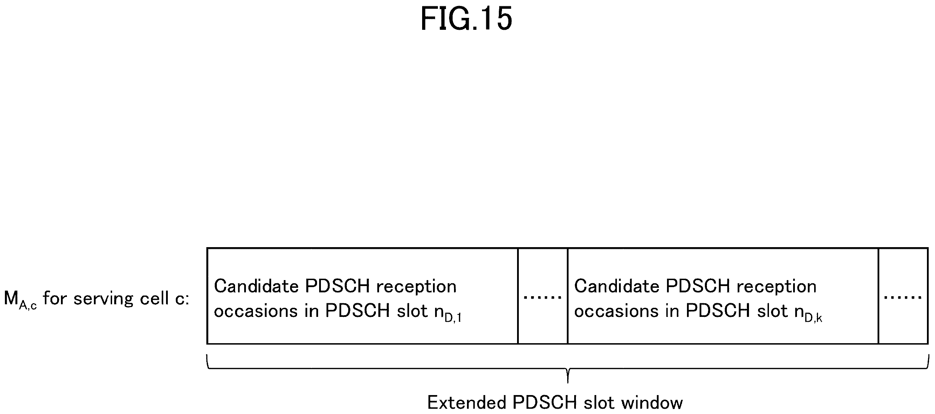

Next, Example 2 will be described. First, step A-1 will be described. In the Example 2, as illustrated in FIG. 15, the terminal 20 determines DL slots included in an extended PDSCH slot window obtained by extending a PDSCH slot window as slots to be the target of the candidate PDSCH reception occasions. There are two options (option 2-1 and option 2-2). Each option will be described below.

### <Example 2 : Step A-1, Option 2-1>

In option 2-1, the terminal 20 determines the extended PDSCH slot window based on the maximum slot duration (denoted by M) from the first PDSCH slot to the last PDSCH slot in which there is a possibility of PDSCH reception.

Note that M may be a value obtained by adding 1 to the maximum value of the difference between K2 values of the first SLIV and the last SLIV in each TDRA row.

More specifically, there are the following option 2 - 1A and option 2 - 1B.

### <Option 2-1A>

In Option 2-1A, the terminal 20 directly extends the PDSCH slot window.

That is, the terminal 20 first empties the extended PDSCH slot window. Next, for each slot n_{D,k} in the original PDSCH slot window, for each i from 0 to M-1 (0 ≦ i < M), the terminal 20 adds a PDSCH slot (n_{D,k}-i) to the extended PDSCH slot window if the PDSCH slot (n_{D,k}-i) is not already present in the extended PDSCH slot window. Note that the original PDSCH slot window is a PDSCH slot window when extension is not performed as shown in FIGS. 6 and 7.

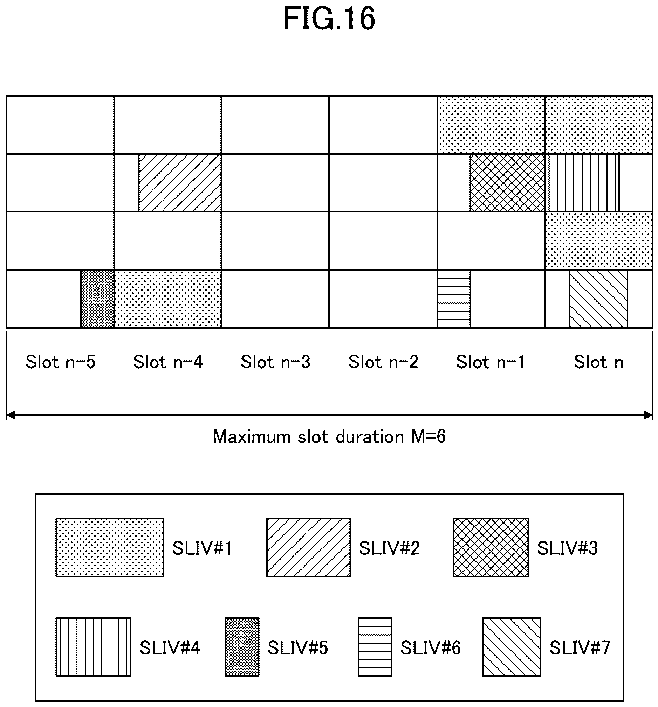

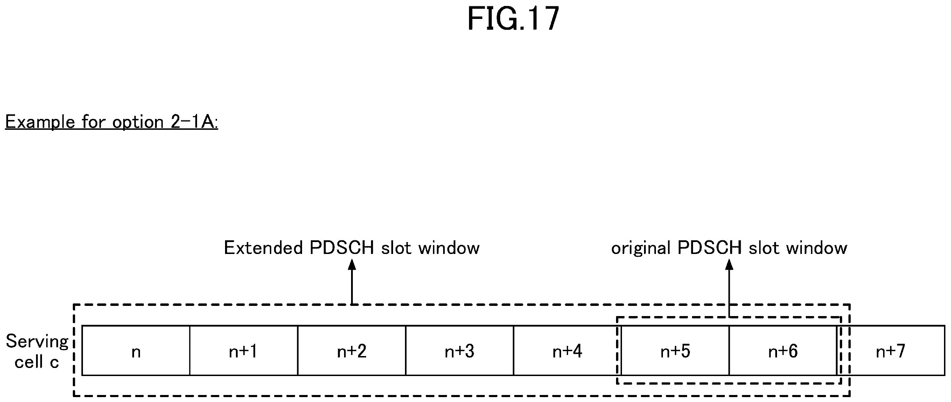

A concrete example of option 2-1A will be described with reference to FIGS. 16 and 17. FIG. 16 shows an example of the TDRA table. As shown in FIG. 16, the maximum slot period is M = 6.

FIG. 17 illustrates an example in which the original PDSCH slot window is slot n + 5 and slot n + 6. Here, an example in which processing is started from the slot n + 6 of the slot n + 5 and the slot n + 6 will be described.

After emptying the extended PDSCH slot window, the terminal 20 adds slot n + 6 (i = 0), slot n + 5 (i = 1), slot n + 4 (i = 2), slot n + 3 (i = 3), slot n + 2 (i = 4), and slot n + 1 (i = 5) to the extended PDSCH slot window. With respect to slot n + 5, since slot n + 5 (i = 0), slot n + 4 (i = 1), slot n + 3 (i = 2), slot n + 2 (i = 3) and slot n + 1 (i = 4) already exist, only slot n (i = 5) is added. As a result, an extended PDSCH slot window as shown in FIG. 17 can be obtained.

### <Option 2-1B>

In Option 2-1B, the terminal 20 obtains an extended K1 set C' (K₁) by extending the K1 set C (K₁). The terminal 20 determines the extended PDSCH slot window based on the extended K1 set C' (K₁) in the same procedure as the procedure for determining the PDSCH slot window in the R16.

To be more specific, the terminal 20 first empties the extended K1 set C' (K₁). Next, for each K_{1,k} of the original K1 set C (K₁), for each i from 0 to M-1 (0 ≦ i < M), the terminal 20 adds "K_{1,k} + ceil (i / (2^{µ_DL-µ_UL}))" to C' (K₁) if the value is not already present in C' (K₁).

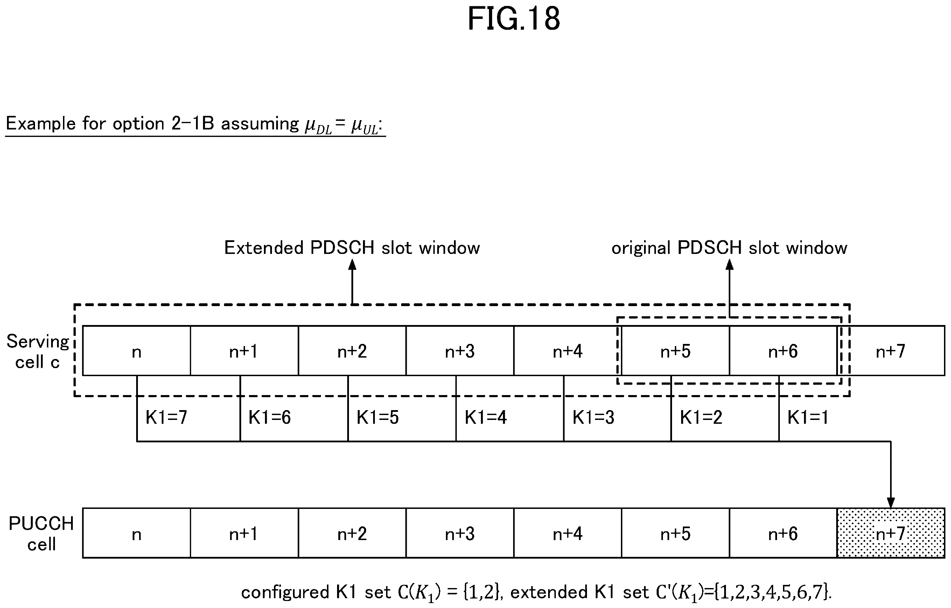

An example of the case where µDL = µUL in option 2-1B will be described with reference to FIG. 18. The TDRA table is as shown in FIG. 16, where the maximum slot duration M = 6.

FIG. 18 shows an example in which C (K₁) is {1, 2}. Here, an example in which the processing is started from K1 = 1 of K1 = 1 and 2 will be described.

After emptying C' (K₁), the terminal 20 adds K1 = 1 (i = 0), K1 = 2 (i = 1), K1 = 3 (i = 2), K1 = 4 (i = 3), K1 = 5 (i = 4), and K1 = 6 (i = 5) to C'(K1) with respect to the original K1 = 1. For the original K1 = 2, since K1 = 2 (i = 0), K1 = 3 (i = 1), K1 = 4 (i = 2), K1 = 5 (i = 3), and K1 = 6 (i = 4) already exist, only K1 = 7 (i = 5) is added.

As a result, C'(K₁) = {1,2,3,4,5,6,7} is obtained, so that the extended PDSCH slot window can be obtained as shown in FIG. 18.

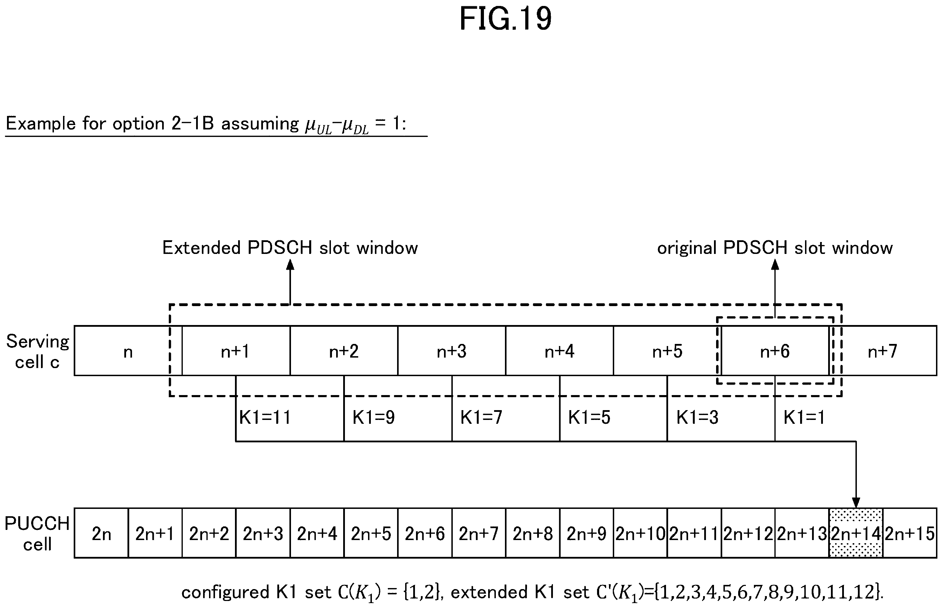

FIG. 19 illustrates an example in which C (K₁) is {1, 2} and µ_{UL} - µ_{DL} = 1. In this case, "K_{1,k} + ceil (i / (2^{µ_DL-µ_UL}))" becomes "K_{1,k} + ceil (2i)".

Here, an example in which the processing is started from K1 = 1 of K1 = 1 and 2 will be described.

After emptying C'(K₁), the terminal 20 adds K1 = 1 (i = 0), K1 = 3 (i = 1), K1 = 5 (i = 2), K1 = 7 (i = 3), K1 = 9 (i = 4), and K1 = 11 (i = 5) to C'(K₁) for the original K1 = 1. For the original K1 = 2, K1 = 2 (i = 0), K1 = 4 (i = 1), K1 = 6 (i = 2), K1 = 8 (i = 3), K1 = 10 (i = 4), K1 = 12 (i = 5) are added to C '(K₁).

As a result, C'(K₁) = {1,2,3,4,5,6,7,8,9,10,11,12,}, so that the extended PDSCH slot window can be obtained as shown in FIG. 19.

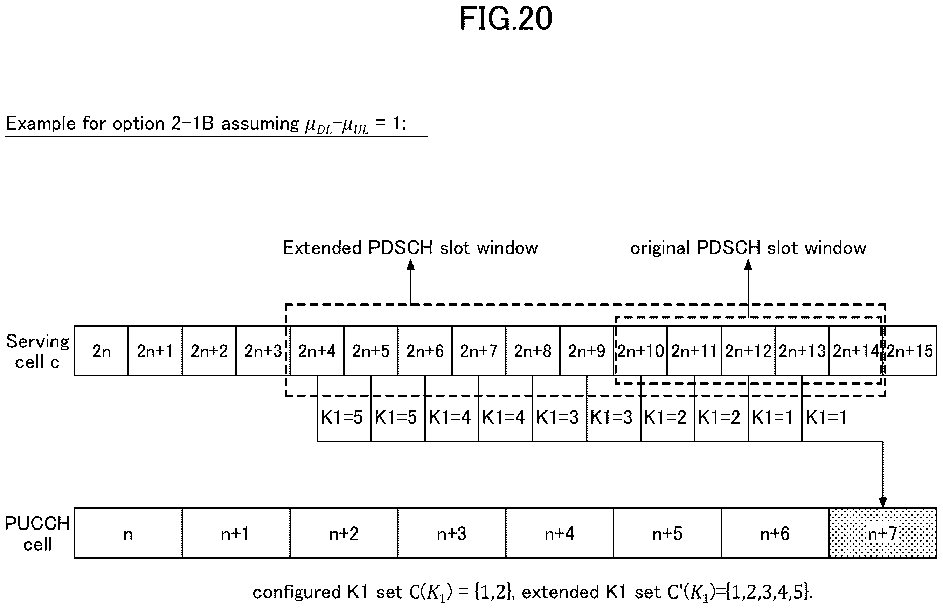

FIG. 20 illustrates an example in which C (K₁) is {1, 2} and µ_{DL} - µ_{UL} = 1. In this case, "K_{1,k} + ceil(i / (2^{µ_DL-µ_UL}))" becomes "K_{1,k} + ceil (i / 2)".

Here, an example in which the processing is started from K1 = 1 of K1 = 1 and 2 will be described.

After making C'(K₁) empty, the terminal 20 adds K1 = 1 (i = 0), K1 = 2 (i = 1), K1 = 3 (i = 3), and K1 = 4 (i = 5) to C'(K₁) with respect to the original K1 = 1. For the original K1 = 2, the terminal 20 adds K1 = 5 (i = 5) to C'(K₁).

As a result, C'(K1) = {1,2,3,4,5}, so that the extended PDSCH slot window can be obtained as shown in FIG. 20.

The value of M may be defined in a specification, may be notified from the base station 10 to the terminal 20 by RRC signaling, or may be determined from the configuration content of the TDRA table.

### <Example 2: Step A-1, Option 2-2>

In Option 2-2, the terminal 20 determines the extended PDSCH slot window based on a set of PDSCH slots (referred to as C (m)) in which PDSCH may be received, in the TDRA table.

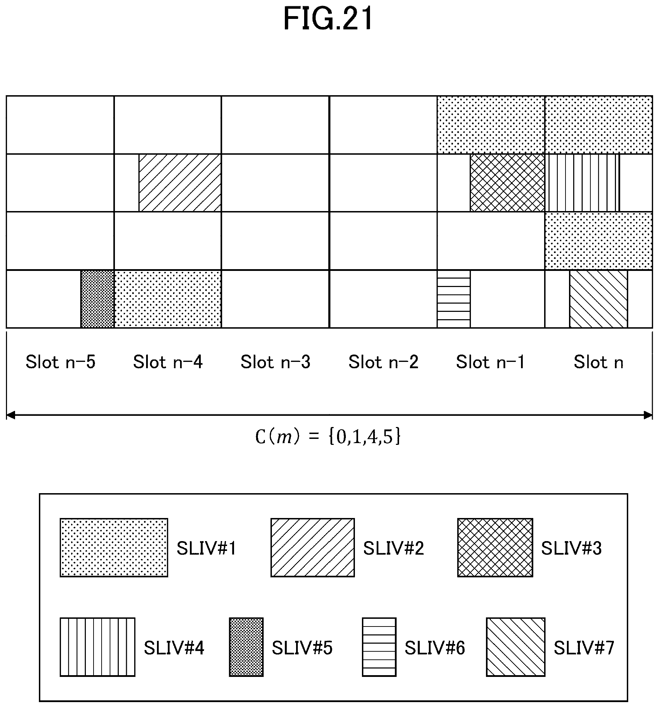

First, the terminal 20 adds m to C (m) in a case where the last TDRA of each TDRA row is in slot n and there is a row in which at least one TDRA is in slot n-m (m ≧1 0). When the TDRA table is as shown in FIG. 21, TDRA exists in slots n (m = 0), n-1 (m = 1), n-4 (m = 4), and n-5 (m = 5), so that C (m) = {0,1,4,5} is obtained. In the subsequent processing, there are the following option 2 - 2A and option 2 - 2B.

### <Option 2-2A>

In Option 2-1A, the terminal 20 directly extends the PDSCH slot window.

That is, the terminal 20 first empties the extended PDSCH slot window and, for each slot n _{D,k} in the original PDSCH slot window, for each mᵢ, adds a PDSCH slot (n_{D,k}-mᵢ) to the extended PDSCH slot window if its value is not already present. Note that the original PDSCH slot window is a PDSCH slot window when extension is not performed as shown in FIGS. 6 and 7.

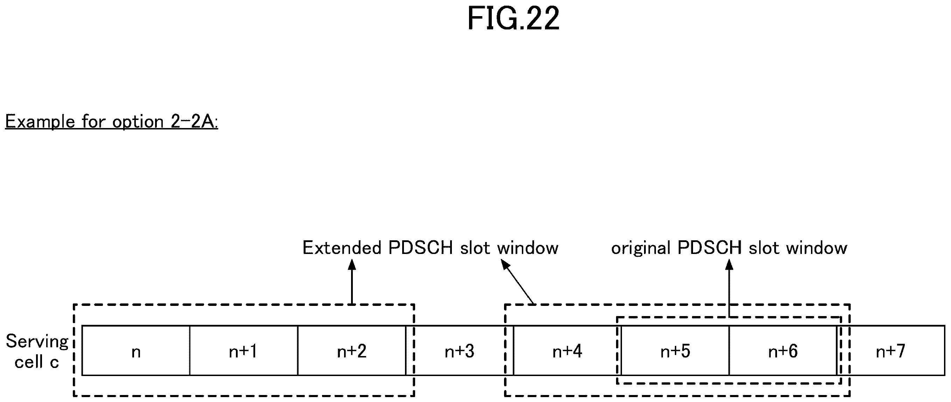

An example of option 2-2A will be described with reference to FIG. 22. The TDRA table is as shown in FIG. 21.

FIG. 22 illustrates an example in which the original PDSCH slot window is slot n + 5 and slot n + 6. Here, an example in which processing is started from the slot n + 6 of the slot n + 5 and the slot n + 6 will be described.

After emptying the extended PDSCH slot window, the terminal 20 adds slot n + 6 (mᵢ = 0), slot n + 5 (mᵢ = 1), slot n + 2 (mᵢ = 4), and slot n + 1 (mᵢ = 5) to the extended PDSCH slot window for slot n + 6. Slot n + 4 (mᵢ = 1) and slot n (mᵢ = 5) are added to slot n + 5. As a result, an extended PDSCH slot window as shown in FIG. 22 can be obtained.

### <Option 2-2B>

In Option 2-1B, the terminal 20 obtains an extended K1 set C'(K₁) by extending the K1 set C (K₁). The terminal 20 determines the extended PDSCH slot window based on the extended K1 set C'(K₁) in the same procedure as the procedure for determining the PDSCH slot window in the R16.

To be more specific, the terminal 20 first empties the extended K1 set C'(K₁). Next, for each K_{1,k} in the original K1 set C (K₁), for each mᵢ, the terminal 20 adds "K_{1,k} + ceil (mᵢ / (2^{µ_DL-µ_UL}))" to C'(K₁) if that value is not already present in C'(K₁) .

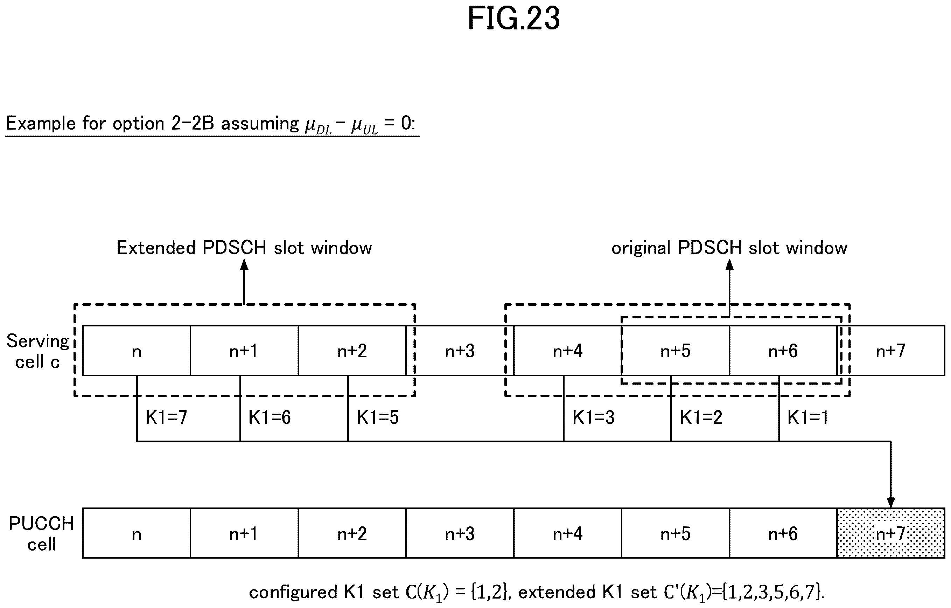

An example of the case where µ_{DL} = µ_{UL} in option 2-2B will be described with reference to FIG. 23. The TDRA table is as shown in FIG. 21, where C (m) = {0,1,4,5}.

FIG. 23 shows an example in which C (K₁) is {1, 2}. Here, an example in which the processing is started from K1 = 1 of K1 = 1 and 2 will be described.

The terminal 20 empties C'(K₁), and then adds K1 = 1 (mᵢ = 0), K1 = 2 (mᵢ = 1), K1 = 5 (mᵢ = 4), and K1 = 6 (mᵢ = 5) to C'(K1) with respect to the original K1= 1. K1 = 3 (mᵢ = 1) and K1 = 7 (mᵢ = 5) are added to the original K1 = 2.

As a result, C'(K₁) = {1,2,3,5,6,7} is obtained, so that the extended PDSCH slot window can be obtained as shown in FIG. 23.

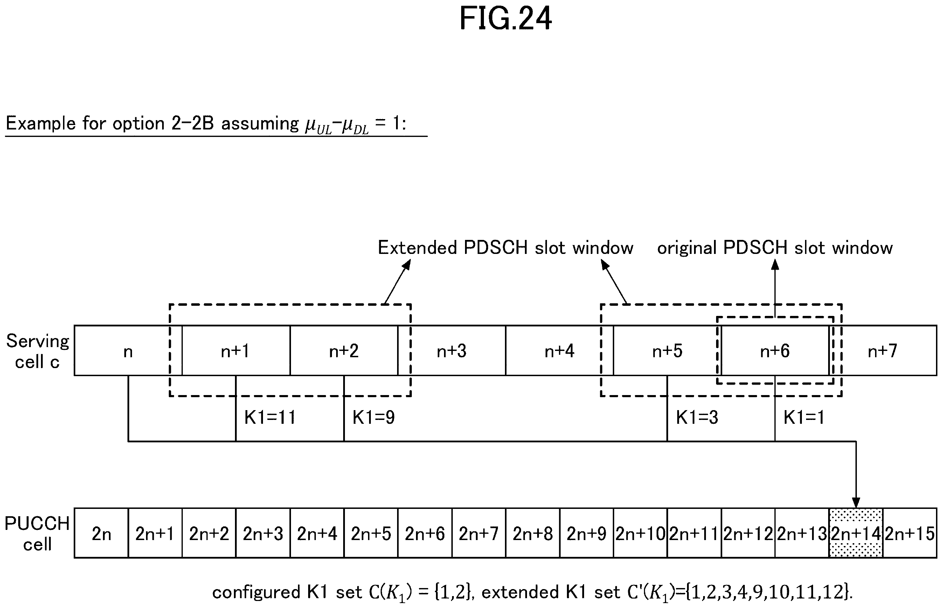

FIG. 24 illustrates an example in which C (K₁) is {1, 2} and µ_{UL}-µ_{DL} = 1. In this case, "K_{1,k} + ceil (mᵢ / (2^{µ_DL-µ_UL}))" is "K_{1,k} + ceil (2mᵢ)".

Here, an example in which the processing is started from K1 = 1 of K1 = 1 and 2 will be described.

The terminal 20 empties C'(K₁), and then adds K1 = 1 (mᵢ = 0), K1 = 3 (mᵢ = 1), K1 = 9 (mᵢ = 4), and K1 = 11 (mᵢ = 5) to C'(K₁) with respect to the original K1 = 1. For the original K1 = 2, K1 = 2 (mᵢ = 0), K1 = 4 (mᵢ = 1), K1 = 10 (mᵢ = 4) and K1 = 12 (mᵢ = 5) are added to C'(K₁) .

As a result, C'(K₁) = {1,2,3,9,10,11,12,} is obtained, so that the extended PDSCH slot window can be obtained as shown in FIG. 24.

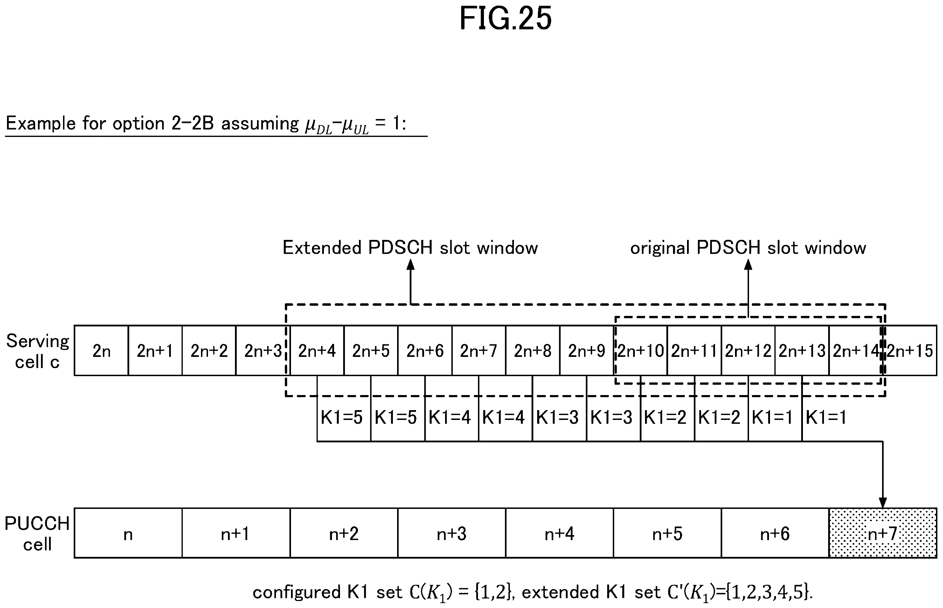

FIG. 25 illustrates an example in which C (K₁) is {1, 2} and µ_{DL} - µ_{UL} = 1. In this case, "K_{1,k} + ceil (mᵢ / (2^{µ_DL-µ_UL}))" becomes "K_{1,k} + ceil (mᵢ / 2)".

Here, an example in which the processing is started from K1 = 1 of K1 = 1 and 2 will be described.

The terminal 20 empties C'(K₁), and then adds K1 = 1 (mᵢ = 0), K1 = 2 (mᵢ = 1), K1 = 3 (mᵢ = 4), and K1 = 4 (mᵢ = 5) to C'(K₁) with respect to the original K1= 1. For the original K1 = 2, the terminal 20 adds K1 = 5 (mᵢ = 5) to C'(K₁).

As a result, C'(K₁) = {1,2,3,4,5} is obtained, so that the extended PDSCH slot window can be obtained as shown in FIG. 25.

Note that the TDRA row group to be considered may be all rows (Opt1) included in the RRC-configured TDRA table, or may be a TDRA row group (Opt2) obtained by excluding rows colliding with the TDD UL configuration from the Opt1 TDRA group.

### <Example 2: Step A-2>

After determining the extended PDSCH slot window as described above, the terminal 20 determines candidate occasions for each slot of the plurality of PDSCH slots in the extended PDSCH slot window. That is, it is determined which SLIV is likely to be allocated to each slot. In other words, for each slot, at least one SLIV to be a candidate for allocation is determined. As a determination method, there are the following two alternatives Alt1 and Alt2.

### <Example 2, Step a- 2, Alt1>

In the Alt1, the terminal 20 uses all types of SLIV in all rows of the TDRA table in each slot of the plurality of PDSCH slots to determine candidate occasions.

For example, when the TDRA table is as shown in FIG. 16, all types of SLIV in FIG. 16 are SLIV #1 to #7 as in FIG. 11. Therefore, in this case, the terminal 20 uses SLIV #1 to SL #7 to determine for each slot.

The terminal 20 selects all or a part of SLIV #1 to #7 as the candidate PDSCH reception occasions in each slot based on the UL collision check and a predetermined rule using the same method as the existing technology in R16.

### <Example 1, Step A-2, Alt2>

In the Alt2, in each slot of the plurality of PDSCH slots in the extended PDSCH slot window, the terminal 20 uses the types of SLIV over all rows in the slot of the TDRA table corresponding to the slot to determine the candidate occasions. To be more specific, the SLIV of each slot (i.e., candidate occasions) is determined by the following procedure.

For each PDSCH slot n'_{D} in the extended PDSCH slot window, the SLIV set is denoted as C_{n'_D} (SLIV) and is initially empty.

The terminal 20 performs the following processing on each PDSCH slot n_{D} in the original PDSCH slot window.

In each TDRA row, the last slot is assumed to be slot n_{D}. Looking at all TDRA rows in slot n'_{D}, if there is a TDRA row for which there is SLIV in slot n'_{D}, the terminal 20 adds to C_{n'_D} (SLIV) those of all SLIV present in slot n'_{D} that are not already present in C_{n'_D} (SLIV).

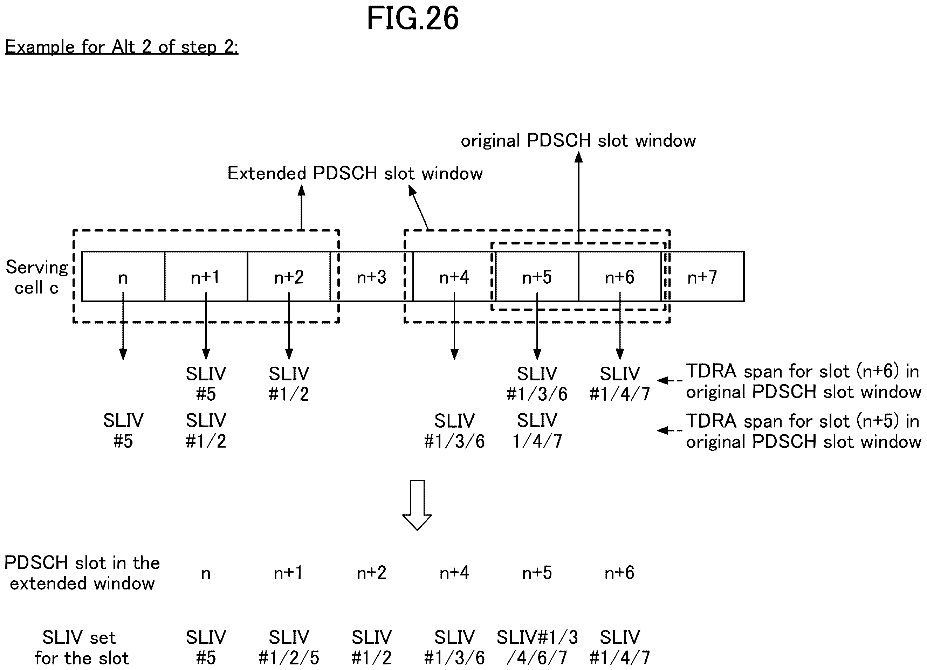

An example in which the TDRA table is as shown in FIG. 16 will be described with reference to FIG. 26 corresponding to FIG. 22.

In FIG. 26, each PDSCH slot n_{D} in the original PDSCH slot window is slot n + 6 and slot n + 5.

If the PDSCH slot n_{D} in the original PDSCH slot window is slot n + 6, slots n, n-1, n-2, n-3, n-4 and n-5 shown in the TDRA table shown in FIG. 16 correspond to slots n + 6, n + 5, n + 4, n + 3, n + 2 and n + 1 in FIG. 26, respectively. As illustrated in FIGS. 16 and 26, the SLIV sets (C_{n'_D} (SLIV)) of slots n + 6, n + 5, n + 4, n + 3, n + 2, and n + 1 are slot n + 6 = {#1, #4, #7}, slot n + 5 = {#1, #3, #6}, slot n + 4 = {}, slot n + 3 = {}, slot n + 2 = {#1, #2}, and slot n + 1 = {#5}, respectively.

If the PDSCH slot n_{D} in the original PDSCH slot window is slot n + 5, slots n, n-1, n-2, n-3, n-4 and n-5 shown in the TDRA table shown in FIG. 16 correspond to slots n + 5, n + 4, n + 3, n + 2, n + 1 and n in FIG. 26, respectively. As illustrated in FIGS. 16 and 26, the SLIV sets (C_{n'_D} (SLIV)) of slots n + 5, n + 4, n + 3, n + 2, n + 1, and n are slot n + 5 = {#1, #4, #7}, slot n + 4 = {#1, #3, #6}, slot n + 3 = {}, slot n + 2 = {}, slot n + 1 = {#1, #2}, and slot n = {#5}, respectively.

Therefore, by combining the above, the SLIV set in each slot is slot n + 6 = {#1, #4, #7}, slot n + 5 = {#1, #3, #4, #6, #7}, slot n + 4 = {#1, #3, #6}, slot n + 2 = {#1, #2}, slot n + 1 = {#1, #2, #5}, and slot n = {#5}. These are candidates for the finally determined occasions in each slot.

The terminal 20 performs UL collision check by using the same method as the existing technology in R16, and selects all or a part of the set of SLIV in each slot according to a predetermined rule as candidate PDSCH reception occasions. When Alt1 and Alt2 are compared, Alt2 has lower redundancy than Alt1.

As a variation other than the above example, the SLIV in each slot may be defined in advance in specification or the like, and the base station 10 and the terminal 20 may determine the candidate PDSCH reception occasions based on the SLIV defined in the specification.

### (Other Examples)

Examples applicable to both Examples 1 and 2 will be described below.

Which of the plurality of Proposals / Options / Alts described above is used may be configured by a parameter of a higher layer transmitted from the base station 10 to the terminal 20, may be notified from the terminal 20 to the base station 10 as a terminal capability (UE capability), may be defined by a specification, or may be configured by a parameter of a higher layer and notified from the terminal 20 as a terminal capability (UE capability).

Information indicating whether or not the terminal 20 supports scheduling of a plurality of PDSCHs based on a single DCI may be defined as the terminal capability (UE capability).

In addition, as the terminal capability (UE capability), information indicating whether or not the terminal 20 supports joint HARQ-ACK feedback for a plurality of PDSCHs scheduled by a single DCI (a function of collectively notifying a plurality of HARQ-ACKs for a plurality of PDSCHs) may be defined.

Information indicating whether or not the terminal supports determination of candidate PDSCH occasions based on each SLIV of each TDRA row may be defined as the terminal capability (UE capability).

As the terminal capability (UE capability), information indicating whether or not the terminal 20 supports determination of the SLIV set (for determining the candidate PDSCH occasions) based on the span of the TDRA row in a certain PDSCH slot may be defined.

As the terminal capability (UE capability), information indicating whether or not extension of the PDSCH slot window is supported may be defined. As the terminal capability (UE capability), information indicating whether or not extension of the K1 set is supported may be defined.

As the terminal capability (UE capability), information indicating whether or not mapping of a plurality of PDSCH slots associated with the corresponding DL slot to a K1 value is supported may be defined.

The terminal 20 may transmit any one or more pieces of the above-described capability information to the base station 10. Based on the capability information received from the terminal 20, the base station 10 may instruct the terminal 20 to perform an operation according to the capability.

According to the technique of the present embodiment described above, there is provided a technique that enables feedback information to be appropriately transmitted when a plurality of PDSCHs are scheduled by one piece of control information.

### (Apparatus Configuration)

Next, functional configuration examples of the base station 10 and the terminal 20 that execute processes and operations described above will be described.

### <Base Station 10>

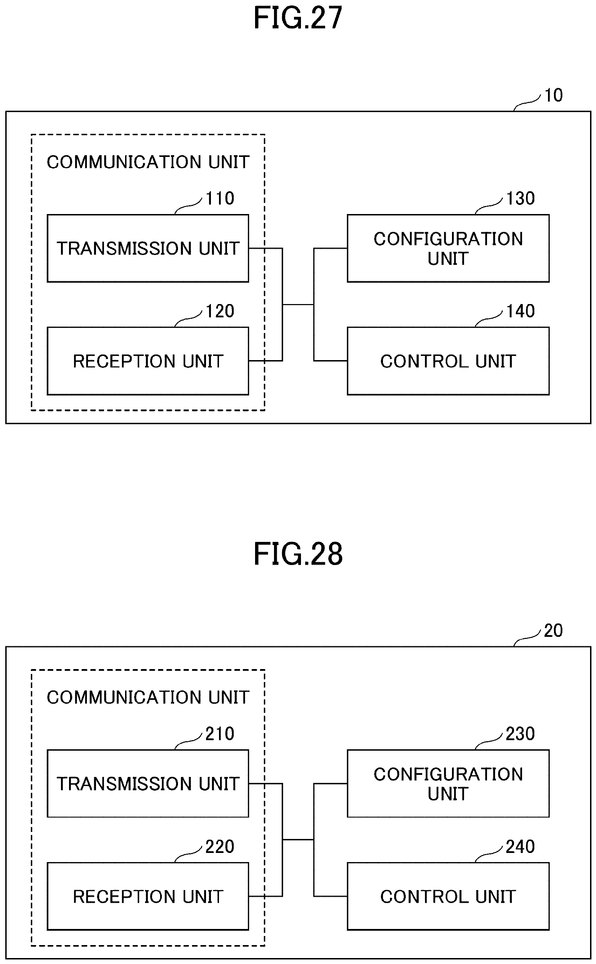

FIG. 27 is a diagram illustrating an example of a functional configuration of the base station 10. As illustrated in FIG. 27, the base station 10 includes a transmission unit 110, a reception unit 120, a configuration unit 130, and a control unit 140. The functional configuration shown in FIG. 27 is merely an example. As long as the operation according to the embodiment of the present invention can be executed, the function division and the name of the function unit may be any one. The transmission unit 110 and the reception unit 120 may be collectively referred to as a communication unit.

The transmission unit 110 has a function of generating a signal to be transmitted to the terminal 20 side and wirelessly transmitting the signal. The reception unit 120 includes a function of receiving various signals transmitted from the terminal 20 and acquiring, for example, information of a higher layer from the received signal. In addition, the transmission unit 110 has a function of transmitting NR-PSS, NR-SSS, NR-PBCH, DL / UL control signal, DCI by PDCCH, data by PDSCH, and the like to the terminal 20.

The configuration unit 130 stores configuration information configured in advance and various kinds of configuration information to be transmitted to the terminal 20 in a storage device included in the configuration unit 130, and reads the configuration information from the storage device as necessary.

The control unit 140 performs scheduling of DL reception or UL transmission of the terminal 20 via the transmission unit 110. Also, the control unit 140 includes a function of performing LBT. A functional unit related to signal transmission in the control unit 140 may be included in the transmission unit 110, and a functional unit related to signal reception in the control unit 140 may be included in the reception unit 120. Further, the transmission unit 110 may be referred to as a transmitter, and the reception unit 120 may be referred to as a receiver.

### <Terminal 20>

FIG. 28 is a diagram illustrating an example of a functional configuration of the terminal 20. As illustrated in FIG. 28, the terminal 20 includes a transmission unit 210, a reception unit 220, a configuration unit 230, and a control unit 240. The functional configuration shown in FIG. 28 is merely an example. As long as the operation according to the embodiment of the present invention can be executed, the function division and the name of the function unit may be any one. The transmission unit 210 and the reception unit 220 may be collectively referred to as a communication unit.

The transmission unit 210 generates a transmission signal from the transmission data and wirelessly transmits the transmission signal. The reception unit 220 wirelessly receives various signals and acquires a signal of a higher layer from the received signal of the physical layer. In addition, the reception unit 220 has a function of receiving NR-PSS, NR-SSS, NR-PBCH, DL/UL/SL control signal, DCI by PDCCH, data by PDSCH, and the like transmitted from the base station 10. In addition, for example, the transmission unit 210 may transmit a physical sidelink control channel (PSCCH), a physical sidelink shared channel (PSSCH), a physical sidelink discovery channel (PSDCH), a physical sidelink broadcast channel (PSBCH), or the like to the other terminal 20 as D2D communication, and the reception unit 120 may receive the PSCCH, the PSSCH, the PSDCH, the PSBCH, or the like from the other terminal 20.

The configuration unit 230 stores various types of configuration information received from the base station 10 or another terminal by the reception unit 220 in a storage device included in the configuration unit 230, and reads out the configuration information from the storage device as necessary. The configuration unit 230 also stores configuration information that is configured in advance. The control unit 240 controls the terminal 20. Also, the control unit 240 includes a function of performing LBT.

The terminal and the base station according to the present embodiment may be configured as a terminal and a base station described in the following items. Also, the following feedback method may be implemented.

### <Configuration Related to Example 1>

### (Item 1)

A terminal including:
a control unit configured to determine a plurality of DL slots for which scheduling may be performed by one piece of control information received from a base station based on time domain resource allocation configuration information and a parameter value indicating transmission timing of feedback information; and
a transmission unit configured to transmit, to the base station, feedback information for the candidate reception occasions in the plurality of DL slots.

### (Item 2)

The terminal as described in item 1,
wherein the control unit is configured to assume a last slot in the time domain resource allocation configuration information as a DL slot corresponding to the parameter value, and determine the plurality of DL slots based on a plurality of slots in which there is resource allocation in the time domain resource allocation configuration information.

### (Item 3)

The terminal as described in item 1 or 2,
wherein the control unit is configured to determine a candidate reception opportunity of each DL slot in the plurality of DL slots based on allocation information of all types in the time domain resource allocation configuration information.

### (Item 4)

The terminal as described in item 1 or 2,
wherein the control unit is configured to determine a candidate reception opportunity of each DL slot in the plurality of DL slots based on allocation information of a slot corresponding to the DL slot in the time domain resource allocation configuration information.

### (Item 5)

A base station including:
a transmission unit configured to transmit, to a terminal, one piece of control information that performs scheduling for a plurality of DL slots; and
a reception unit configured to receive, from the terminal, feedback information for candidate reception occasions in a plurality of DL slots that are determined based on time domain resource allocation configuration information and a parameter value indicating transmission timing of feedback information.

### (Item 6)

A feedback method executed by a terminal, including:
determining a plurality of DL slots for which scheduling may be performed by one piece of control information received from a base station based on time domain resource allocation configuration information and a parameter value indicating transmission timing of feedback information; and
transmitting, to the base station, feedback information for the candidate reception occasions in the plurality of DL slots.

According to any of the above configurations, there is provided a technique that enables feedback information to be appropriately transmitted when a plurality of PDSCHs are scheduled by one piece of control information. According to the second term, multiple DL slots can be determined based on, for example, a TDRA table. According to the third item, it is possible to easily determine allocation information used for determining the candidate reception opportunity in each DL slot. According to the fourth item, redundancy can be made lower than that of the third item.

### <Configuration Related to Example 2>

### (Item 1)

A terminal including:
a control unit configured to determine a plurality of DL slots for which scheduling may be performed by one piece of control information received from a base station by extending a DL slot corresponding to a parameter value that indicates a transmission timing of feedback information, and to determine candidate reception occasions in the plurality of DL slots; and
a transmission unit configured to transmit, to the base station, feedback information for the candidate reception occasions in the plurality of DL slots.

### (Item 2)

The terminal as described in item 1,
wherein the control unit is configured to extend the DL slot by extending a set of the parameter value.

### (Item 3)

The terminal as described in item 1 or 2,
wherein the control unit is configured to determine a candidate reception opportunity of each DL slot in the plurality of DL slots based on allocation information of all types in time domain resource allocation configuration information.

### (Item 4)

The terminal as described in item 1 or 2,
wherein the control unit is configured to determine a candidate reception opportunity of each DL slot in the plurality of DL slots based on allocation information of a slot corresponding to the DL slot in time domain resource allocation configuration information.

### (Item 5)

A base station including:
a transmission unit configured to transmit, to a terminal, one piece of control information that performs scheduling for a plurality of DL slots; and
a reception unit configured to receive, from the terminal, feedback information for candidate reception occasions in a plurality of DL slots that are determined by extending a DL slot corresponding to a parameter value that indicates a transmission timing of the feedback information.

### (Item 6)

A feedback method executed by a terminal, including:
determining a plurality of DL slots for which scheduling may be performed by one piece of control information received from a base station by extending a DL slot corresponding to a parameter value that indicates a transmission timing of feedback information, and determining candidate reception occasions in the plurality of DL slots; and
transmitting, to the base station, feedback information for the candidate reception occasions in the plurality of DL slots.

According to any of the above configurations, there is provided a technique that enables feedback information to be appropriately transmitted when a plurality of PDSCHs are scheduled by one piece of control information. According to the second term, the DL slot can be extended, for example, by extending the K1 set. According to the third item, it is possible to easily determine the allocation information used for determining the candidate reception opportunity in each DL slot. According to the fourth item, redundancy can be made lower than that of the third item.

### (Hardware configuration)

The block diagrams (Fig. 27 and Fig. 28) used in the description of the embodiment described above illustrate the block of functional unit. Such function blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions transmission is referred to as the transmitting unit or the transmitter. As described above, the attainment method thereof is not particularly limited.

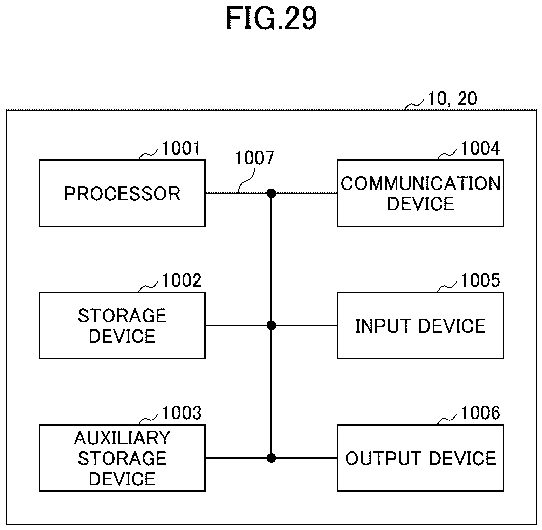

For example, the base station 10, the terminal 20, and the like in one embodiment of this disclosure may function as a computer for performing the processing of a radio communication method of this disclosure. Fig. 29 is a diagram illustrating an example of a hardware configuration of the base station 10 and the terminal 20 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. For example, the control unit 140 of the base station 10 illustrated in Fig. 27 may be attained by a control program that is stored in the storage device 1002 and is operated by the processor 1001. In addition, for example, the control unit 240 of the terminal 20 illustrated in Fig. 28 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disk), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), future radio access (FRA), new radio (NR), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding information. For example, a radio resource may be indicated by an index.

The names used in the parameters described above are not a limited name in any respect. Further, expressions or the like using such parameters may be different from those explicitly disclosed in this disclosure. Various channels (for example, PUSCH, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the terminal in this disclosure may be replaced with the base station. In this case, the function of the user terminal described above may be provided in the base station.

The terms "determining" and "determining" used in this disclosure may involve diverse operations. "Determining" and "determining", for example, may include deeming judging, calculating, computing, processing, deriving, investigating, looking up (search, inquiry) (for example, looking up in a table, a database, or another data structure), and ascertaining, as "determining" and "determining". In addition, "determining" and "determining" may include deeming receiving (for example, receiving information), transmitting (for example, transmitting information), input, output, and accessing (for example, accessing data in a memory), as "determining" and "determining". In addition, "determining" and "determining" may include deeming resolving, selecting, choosing, establishing, comparing, and the like as "determining" and "determining". That is, "determining" and "determining" may include deeming an operation as "determining" and "determining". In addition, "determining (determining)" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot on the basis of a standard to be applied.

The description "on the basis of" that is used in this disclosure does not indicate "only on the basis of", unless otherwise specified. In other words, the description "on the basis of" indicates both "only on the basis of" and "at least on the basis of".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time unit greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time unit at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, unit representing TTI may be referred to as a slot, a mini slot, and the like, but not a subframe.

Here, TTI, for example, indicates minimum time unit of scheduling in radio communication. For example, in an LTE system, the base station performs scheduling for allocating a radio resource (a frequency bandwidth, transmission power, and the like that can be used in each of the terminals 20) in TTI unit, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined on the basis of the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a subcarrier group (SCG), a resource element group (REG), a PRB pair, a RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it may not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are in the plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and changed modes without departing from the spirit and scope of this disclosure defined by the description of the claims. Therefore, the description in this disclosure is for illustrative purposes and does not have any limiting meaning with respect to this disclosure.

### DESCRIPTION OF SYMBOLS

- 10: base station
- 110: transmission unit
- 120: reception unit
- 130: configuration unit
- 140: control unit
- 20: terminal
- 210: transmission unit
- 220: reception unit
- 230: configuration unit
- 240: control unit
- 1001: processor
- 1002: storage device
- 1003: auxiliary storage device
- 1004: communication device
- 1005: input device
- 1006: output device

## Claims

1. A terminal comprising:
a control unit configured to determine a plurality of DL slots for which scheduling may be performed by one piece of control information received from a base station by extending a DL slot corresponding to a parameter value that indicates a transmission timing of feedback information, and to determine candidate reception occasions in the plurality of DL slots; and
a transmission unit configured to transmit, to the base station, feedback information for the candidate reception occasions in the plurality of DL slots.

2. The terminal as claimed in claim 1,
wherein the control unit is configured to extend the DL slot by extending a set of the parameter value.

3. The terminal as claimed in claim 1 or 2,
wherein the control unit is configured to determine a candidate reception opportunity of each DL slot in the plurality of DL slots based on allocation information of all types in time domain resource allocation configuration information.

4. The terminal as claimed in claim 1 or 2,
wherein the control unit is configured to determine a candidate reception opportunity of each DL slot in the plurality of DL slots based on allocation information of a slot corresponding to the DL slot in time domain resource allocation configuration information.

5. A base station comprising:
a transmission unit configured to transmit, to a terminal, one piece of control information that performs scheduling for a plurality of DL slots; and
a reception unit configured to receive, from the terminal, feedback information for candidate reception occasions in a plurality of DL slots that are determined by extending a DL slot corresponding to a parameter value that indicates a transmission timing of the feedback information.

6. A feedback method executed by a terminal, comprising:
determining a plurality of DL slots for which scheduling may be performed by one piece of control information received from a base station by extending a DL slot corresponding to a parameter value that indicates a transmission timing of feedback information, and determining candidate reception occasions in the plurality of DL slots; and
transmitting, to the base station, feedback information for the candidate reception occasions in the plurality of DL slots.
